# EUROPÄISCHE PATENTANMELDUNG

(11) **EP 1 595 752 A2**
(43) Veröffentlichungstag der Anmeldung: **16.11.2005**
(21) Anmeldenummer: 05010311.8
(22) Anmeldetag: 12.05.2005
(51) Int. Cl.: B60R 21/16

(54) **Gassack für ein Fahrzeuginsassen-Rückhaltesystem**

(30) Priorität: 13.05.2004 DE 102004023904
(71) Anmelder: TRW Automotive GmbH, 73553 Alfdorf (DE)
(72) Erfinder: Heigl, Jürgen, 73560 Böbingen (DE)
(74) Vertreter: Kitzhofer, Thomas

(57) **Zusammenfassung**

Ein Gassack, insbesondere ein Seitengassack für ein Fahrzeuginsassen-Rückhaltesystem, hat eine erste und eine zweite, miteinander verbundene, flächige, aus einem Gewebe mit Kettfäden (18) und Schußfäden (20) bestehende Seitenwand (12, 14), die wenigstens eine aufblasbare Kammer (15) seitlich wenigstens abschnittsweise begrenzen. Zwischen den Seitenwänden (12, 14) ist wenigstens eine langgestreckte, durchgängig über einen Großteil der Länge (L) des Seitengassacks (10) verlaufende Trennwand (22) vorgesehen, die eine Gasleitung (24') begrenzt, die einströmendes Gas in die aufblasbaren Kammer (15) leitet. Die Trennwand (22) ist durch Fäden gebildet, die den Gewebeverbund einer der Seitenwände (12, 14) in Richtung zur gegenüberliegenden Seitenwand (14, 12) verlassen und über eine vorbestimmte Länge (t) im Inneren des Seitengassacks (10) verlaufen. Die Trennwand (22) weist wenigstens einen Überströmabschnitt (28) mit einer höheren Gasdurchlässigkeit als der der restlichen Trennwand (22) auf, der einen Strömungsweg von der Gasleitung (24) zu einer angrenzenden aufblasbaren Kammer (15) bildet.

## Beschreibung

Die Erfindung betrifft einen Gassack, insbesondere einen Seitengassack für ein Fahrzeuginsassen-Rückhaltesystem.

Großflächige Seitengassäcke decken ganze Seitenscheibenbereiche eines Fahrzeugs ab. Um dennoch ein gleichmäßiges und schnelles Aufblasen zu erreichen, sind häufig Gasleitungen vorgesehen, über die das zum Aufblasen verwendete Gas von einem Gasgenerator zu einzelnen aufblasbaren Kammern des Gassacks geleitet wird. Die Gasleitung sollte ein möglichst großes Volumen haben, aber dennoch möglichst wenig Stauraum beanspruchen und natürlich einfach und kostengünstig zu fertigen sein.

Aufgabe der Erfindung ist es, einen Gassack mit einer solchen Gasleitung zu schaffen. Hierzu weist der Gassack für ein Fahrzeuginsassen-Rückhaltesystem eine erste und eine zweite, miteinander verbundene, flächige, aus einem Gewebe mit Kett- und Schußfäden bestehende Seitenwand auf, die wenigstens eine aufblasbare Kammer seitlich wenigstens abschnittsweise begrenzen. Zwischen den Seitenwänden ist wenigstens eine langgestreckte, durchgängig über einen Großteil der Länge des Seitengassacks verlaufende Trennwand vorgesehen, die eine Gasleitung begrenzt, die einströmendes Gas in die aufblasbare Kammer leitet, wobei die Trennwand durch Fäden gebildet ist, die den Gewebeverbund einer der Seitenwände in Richtung zur gegenüberliegenden Seitenwand verlassen und über eine vorbestimmte Länge im Inneren des Seitengassacks verlaufen. Die Trennwand weist wenigstens einen Überströmabschnitt mit einer höheren Gasdurchlässigkeit als der der restlichen Trennwand auf, wobei der Überstromabschnitt einen Strömungsweg von der Gasleitung zu einer angrenzenden aufblasbaren Kammer bildet. Die Fadenabschnitte im Bereich der Trennwand sind dort vorzugsweise miteinander verwoben, so daß die Trennwand als Gewebe ausgeführt ist. Die Fäden können aber auch ohne Verwebung durch den Gassack verlaufen.

Die Trennwand kann direkt bei der Herstellung des Seitengassacks z.B. durch ein bekanntes Webverfahren einstückig mit dem restlichen Seitengassack oder Abschnitten des Seitengassacks gewebt werden. Da die beiden Seitenwände im Bereich der Trennwand im aufgeblasenen Gassack einen gewissen Abstand voneinander einnehmen, also nicht direkt aneinander anliegen, hat die Gasleitung ein relativ großes Volumen.

Es können mehrere Überströmabschnitte vorgesehen sein, z.B. einer oder mehrere pro aufblasbarer Kammer.

Außerhalb des Überströmabschnitts ist die Trennwand bevorzugt weitgehend gasdicht ausgebildet, so daß das Gas im wesentlichen nur durch den oder die Überströmabschnitte von der Gasleitung in die aufblasbaren Kammern gelangt. Die Gasdichtigkeit der Trennwand läßt sich z.B. dadurch erzielen, daß die Trennwand und/oder die die Trennwand bildenden Fäden mit einer Beschichtung versehen sind, die die Gasdurchlässigkeit der Trennwand verringert.

Um eine hohe Gasdurchlässigkeit zu erreichen, kann z.B. der Überströmabschnitt eine geringere Fadendichte aufweisen als die restliche Trennwand. Darunter sind auch Ausführungsformen zu verstehen, in denen im Überströmabschnitt die Trennwand wenigstens eine Lücke aufweist. Es ist möglich, im Überströmabschnitt mehrere Lücken vorzusehen, zwischen denen jeweils Trennwandstege angeordnet sind. Diese Anordnung bietet eine gute Gasdurchlässigkeit, während durch die Stege die Form des Seitengassacks und der Gasleitung bewahrt wird, wenn unter Druck stehendes Gas durch die Gasleitung strömt.

Die unterschiedliche Gasdichtigkeit kann auch durch das Weglassen einer Beschichtung im Bereich des Überströmabschnitts hervorgerufen oder unterstützt werden.

In einer bevorzugten Ausführungsform der Erfindung treten zur Bildung der Trennwand Kettfäden, Schußfäden und/oder Polfäden der ersten Seitenwand aus dem Gewebeverbund der ersten Seitenwand aus, verlaufen zur zweiten Seitenwand und treten in den Gewebeverbund der zweiten Seitenwand ein.

Die Fadendichte der Trennwand ist bevorzugt relativ hoch. Es ist möglich, die Hälfte bis zwei Drittel der Kett- und/oder Schußfäden einer Seitenwand zur Bildung der Trennwand einzusetzen. Bei einer Fadendichte von 235 Faden/dm entspräche dies einer Fadendichte von etwa 120 bis 180 Faden/dm in der Trennwand. Anstelle der Kett- oder Schußfäden oder zusätzlich zu diesen können auch Polfäden, z.B. mit einer ähnlichen Fadendichte, verwendet werden.

Es können z.B. zwei Trennwände vorgesehen sein, die im Querschnitt gesehen die Form eines X bilden.

Nach einer anderen Ausführungsform der Erfindung sind vier Trennwände vorgesehen, die eine im Querschnitt rautenförmige Gasleitung begrenzen. In dieser Ausführungsform ist die Formstabilität der Gasleitung sehr hoch.

In beiden Fällen entspricht die Fadendichte der ersten Seitenwand stets der Fadendichte der zweiten Seitenwand, d.h. die Anzahl der Fäden, die die erste bzw. zweite Seitenwand verlassen, ist gleich. Dies gilt auch für die Anzahl der Fäden, die in die zweite bzw. erste Seitenwand eintreten.

Bevorzugt verläuft die Gasleitung in unmittelbarer Nähe und parallel zu einem oberen Rand des Seitengassacks. Diese Ausbildung hat sich gerade in vorhangförmigen Seitengassäcken bewährt.

Die Gasleitung steht vorteilhaft unmittelbar mit einem Gasgenerator in Strömungsverbindung, so daß das von diesem erzeugte Druckgas direkt in die Gasleitung und von dort in die aufblasbaren Kammern gelangt.

Weitere Vorteile und Merkmale der Erfindung ergeben sich aus der nachfolgenden Beschreibung zweier Ausführungsbeispiele im Zusammenhang mit den beigefügten Zeichnungen. In diesen zeigen:
- Figur 1 eine perspektivische Ansicht eines Ausschnitts eines erfindungsgemäßen Seitengassacks in einer ersten Ausführungsform mit zwei Trennwänden;
- Figur 2 eine perspektivische Darstellung eines Ausschnitts des Seitengassacks aus Figur 1 im Bereich eines Überströmabschnitts;
- Figur 3 eine perspektivische Darstellung eines Ausschnitts eines erfindungsgemäßen Seitengassacks in einer Ausführungsform mit vier Trennwänden; und
- Figur 4 einen Schnitt durch einen beschichteten Faden einer Trennwand eines Gassacks aus einer der vorherigen Figuren.

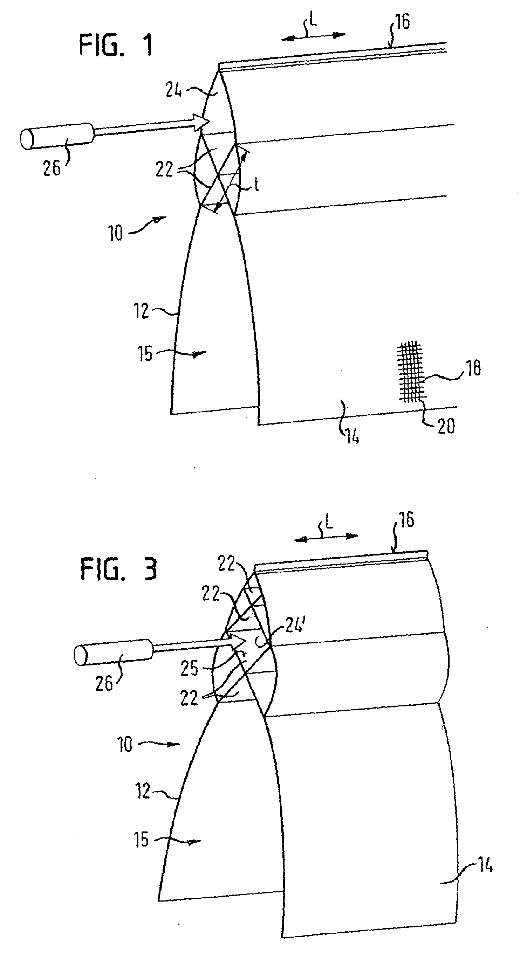

Figur 1 zeigt einen Seitengassack 10, der z.B. als vorhangartiger Gassack in einem Fahrzeug eingesetzt werden kann und dort eine oder mehrere Seitenscheiben abdeckt.

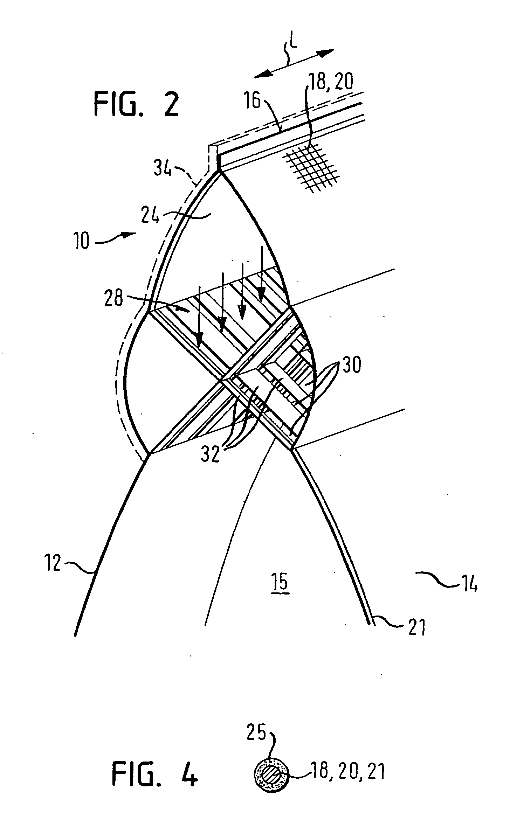

Der Seitengassack 10 hat eine erste Seitenwand 12 und eine zweite Seitenwand 14. Die Seitenwände 12, 14 begrenzen wenigstens abschnittsweise mehrere aufblasbare Kammern 15, von denen nur eine gezeigt ist. Die Seitenwände 12 und 14 bestehen aus einem Gewebe, das Kettfäden 18 und Schußfäden 20 enthält, wie dies auch in Figur 2 angedeutet ist. Zusätzlich können Polfäden 21 vorgesehen sein. An einem oberen Rand 16, der eine der Längsseiten des Seitengassacks 10 bildet, sind die Seitenwände 12, 14 miteinander verwoben. In einem im Fahrzeug eingebauten Zustand könnte der Gassack im Bereich des Randes 16 z.B. an einem Dachrahmen befestigt sein.

Ein kurzes Stück unterhalb des Randes 16 sind die beiden Seitenwände 12, 14 durch zwei Trennwände 22 miteinander verbunden. Beide Trennwände 22 verlaufen über eine vorbestimmte Länge t frei durch das Innere des Seitengassacks 10 zwischen den Seitenwänden 12, 14. Die Trennwände 22 sind durch Kett- und/oder Schußfäden 18, 20 einer der beiden Seitenwände oder ergänzend hierzu oder ausschließlich durch zusätzliche Polfäden 21 gebildet. Polfäden sind zusätzliche Fäden im Gewebe einer oder beider Seitenwände 12, 14, die flottierend mitgeführt werden (angedeutet in Figur 3).

Bei der Bildung einer Trennwand 22 verlassen die Kett-, Schuß- und/oder Polfäden 18, 20, 21 den Gewebeverbund der jeweiligen Seitenwand 12, 14 und verlaufen über eine vorbestimmte Länge t frei im Inneren des Seitengassacks 10, bis sie in den Gewebeverbund der anderen Seitenwand 14, 12 eintreten.

Die die Trennwände 22 bildenden Fäden treten aus dem Gewebeverbund einer Seitenwand, beispielsweise angenommen der ersten Seitenwand 12 aus, werden außerhalb der Seitenwand 12 wieder miteinander verwoben und verlaufen ein Stück frei durch das Innere des Seitengassacks 10 und treten in den Gewebeverbund der andere Seitenwand, in diesem Fall der zweiten Seitenwand 14, ein. Die die Trennwände 22 bildenden Fäden können auch ohne eine Verwebung von einer Seitenwand 12, 14 durch den Gassack 10 zur anderen Seitenwand 14, 12 verlaufen.

Die bevorzugte Fadendichte der Trennwand 22 außerhalb des Überströmabschnitts 28 beträgt etwa die Hälfte bis zwei Drittel der Fadendichte der Seitenwände 12, 14. Bei einer für Gassackgewebe üblichen Fadendichte von 235 Faden/dm entspricht dies also 120 bis 180 Faden/dm.

Die Trennwände 22 erstrecken sich zumindest über einen Großteil der Längserstreckung in Richtung L des Seitengassacks 10. Zwischen dem oberen Rand 16 und den Trennwänden 22 ist eine Gasleitung 24 ausgebildet. Wie in Figur 1 angedeutet, steht diese Gasleitung 24 in direkter Strömungsverbindung mit einem Gasgenerator 26, der das zum Aufblasen des Seitengassacks 10 notwendige Gas liefert.

Im Bereich jeder aufblasbaren Kammer 15 weist die Trennwand 22 wenigstens einen Überströmabschnitt 28 auf. Ein solcher Überströmabschnitt 28 ist in Figur 2 gezeigt. Im Bereich des Überströmabschnitts 28 ist die Gasdurchlässigkeit der Trennwand 22 deutlich größer als in ihrem restlichen Bereich. Hierdurch kann im Überströmabschnitt 28 das Gas aus der Gasleitung 24, wie durch die Pfeile angedeutet, in die aufblasbare Kammer 15 überströmen. Durch die hohe Gasdichtigkeit der Trennwand 22 im restlichen Bereich ist ein Überströmen des Gases in die aufblasbaren Kammern 15 außerhalb des oder der Überströmabschnitte 28 weitgehend verhindert.

Die Gasdurchlässigkeit der Überströmabschnitte 28 kann dadurch erreicht werden, daß die Trennwände 22 Lücken 30 aufweisen, wie im gezeigten Beispiel. Zwischen den Lücken 30 liegen hier Stege 32, die die gleiche Gasdichtigkeit aufweisen wie der Rest der Trennwand 22.

Es wäre auch möglich, im gesamten Bereich des Überströmabschnitts 28 die Fadendichte der Trennwand 22 gleichmäßig zu verringern und hierüber eine höhere Gasdurchlässigkeit zu erreichen.

In der in Figur 3 gezeigten Variante sind vier Trennwände 22 vorgesehen, die eine im Querschnitt rautenförmige Gasleitung 24' begrenzen. Das Gas strömt hauptsächlich durch die Gasleitung 24', es kann aber auch vorgesehen sein, daß auch Gas durch die zwischen den Trennwänden 22 und dem Rand 16 liegenden, parallel zur Gasleitung 24' verlaufenden Abschnitte des Seitengassacks 10 strömt.

Um die Gasdichtigkeit der Trennwände 22 außerhalb der Überströmabschnitte 28 zu erhöhen, ist bevorzugt eine Beschichtung 25 der Trennwände 22 oder der die Trennwände 22 bildenden Fäden vorgesehen. Die Beschichtung 25 kann z.B. durch wassergelöstes Silikon erfolgen. Eine derartige Beschichtung dient dann zusätzlich auch als Schutz gegen die thermische Belastung durch den heißen Gasstrom.

Werden nur Kett- und/oder Schußfäden der Seitenwände 12, 14 zur Bildung der Trennwand 22 herangezogen, bleibt von den Seitenwandgeweben im Bereich der Gasleitung 24 nur ein Traggerüst übrig. Werden zusätzliche Polfäden 21 eingesetzt, um die Trennwände 22 zu bilden, kann die Fadendichte der Seitenwände 12, 14 im Bereich der Gasleitung 24 auch unverändert bleiben. Auch Ausführungsformen, die zwischen diesen Extremen liegen, sind denkbar.

Im Bereich der Gasleitung 24 können die Seitenwände 12, 14 zusätzlich durch Gewebelagen abgedichtet sein. Dies ist schematisch in Figur 2 auf der Seite der ersten Seitenwand 12 mit dem Bezugszeichen 34 gezeigt.

In einer Ausführungsform der Erfindung sind die beiden Seitenwände 12, 14 über den oberen Rand 16 hinaus fortgesetzt und jeweils zur Seite umgeschlagen, um den Seitengassack 10 im Bereich der Gasleitung 24 abzudecken und so für eine höhere Gasdichtigkeit zu sorgen. In diesem Fall ist die Gewebelage 34 dann durch einen einstückig mit der Seitenwand 12 ausgebildeten Gewebeabschnitt gebildet, der z.B. durch Verkleben mit der ersten Seitenwand 12 verbunden ist. Im Bereich der zweiten Seitenwand 14 ist eine analoge Konstruktion vorgesehen.

Die Abdichtung der ersten und zweiten Seitenwand 12, 14 im Bereich der Trennwände 22 und der Gasleitung 24 kann auch durch eine Beschichtung erfolgen.

Aus geometrischen Gründen sind bevorzugt eine gerade Anzahl von Trennwänden 22 vorgesehen, wobei genau so viele Fäden von der ersten Seitenwand 12 zur zweiten Seitenwand 14 verlaufen wie Fäden von der zweiten Seitenwand 14 zur ersten Seitenwand 12. Dies gilt besonders, wenn die Trennwände 22 zumindest zu einem Großteil aus Kett- und/oder Schußfäden 18, 20 der beiden Seitenwände 12, 14 bestehen.

## Patentansprüche

1. Gassack, insbesondere Seitengassack für ein Fahrzeuginsassen-Rückhaltesystem,
mit einer ersten und einer zweiten, miteinander verbundenen, flächigen, aus einem Gewebe mit Kettfäden (18) und Schußfäden (20) bestehenden Seitenwand (12, 14), die wenigstens eine aufblasbare Kammer (15) seitlich wenigstens abschnittsweise begrenzen,
wobei zwischen den Seitenwänden (12, 14) wenigstens eine langgestreckte, durchgängig über einen Großteil der Länge (L) des Seitengassacks (10) verlaufende Trennwand (22) vorgesehen ist, die eine Gasleitung (24; 24') begrenzt, die einströmendes Gas in die aufblasbare Kammer (15) leitet,
wobei die Trennwand (22) durch Fäden gebildet ist, die den Gewebeverbund einer der Seitenwände (12, 14) in Richtung zur gegenüberliegenden Seitenwand (14, 12) verlassen und über eine vorbestimmte Länge (t) im Inneren des Seitengassacks (10) verlaufen, und
wobei die Trennwand (22) wenigstens einen Überströmabschnitt (28) mit einer höheren Gasdurchlässigkeit als der der restlichen Trennwand (22) aufweist, der einen Strömungsweg von der Gasleitung (24; 24') zu einer angrenzenden aufblasbaren Kammer (15) bildet.

2. Gassack nach Anspruch 1, **dadurch gekennzeichnet, daß** die Trennwand (22) außerhalb des Überströmabschnitts (28) weitgehend gasdicht ausgebildet ist.

3. Gassack nach einem der vorhergehenden Ansprüche, **dadurch gekennzeichnet, daß** die Trennwand (22) mit einer Beschichtung (25) versehen ist.

4. Gassack nach einem der vorhergehenden Ansprüche, **dadurch gekennzeichnet, daß** die die Trennwand (22) bildenden Fäden mit einer Beschichtung (25) versehen sind.

5. Gassack nach einem der vorhergehenden Ansprüche, **dadurch gekennzeichnet, daß** der Überströmabschnitt (28) eine geringere Fadendichte aufweist als die restliche Trennwand (22).

6. Gassack nach einem der vorhergehenden Ansprüche, **dadurch gekennzeichnet, daß** im Überströmabschnitt (28) die Trennwand (22) wenigstens eine Lücke (30) aufweist.

7. Gassack nach einem der vorhergehenden Ansprüche, **dadurch gekennzeichnet, daß** zur Bildung der Trennwand (22) Kettfäden (18), Schußfäden (20) und/oder Polfäden (21) der ersten Seitenwand (12) aus dem Gewebeverbund der ersten Seitenwand (12) austreten, zur zweiten Seitenwand (14) verlaufen und in den Gewebeverbund der zweiten Seitenwand (14) eintreten.

8. Gassack nach einem der vorhergehenden Ansprüche, **dadurch gekennzeichnet, daß** zwei Trennwände (22) vorgesehen sind, die im Querschnitt gesehen die Form eines X bilden.

9. Gassack nach einem der vorhergehenden Ansprüche, **dadurch gekennzeichnet, daß** vier Trennwände (22) vorgesehen sind, die eine im Querschnitt rautenförmige Gasleitung (24') begrenzen.

10. Gassack nach einem der vorhergehenden Ansprüche, **dadurch gekennzeichnet, daß** die Gasleitung (24; 24') in unmittelbarer Nähe und parallel zu einem oberen Rand (16) des Seitengassacks (10) verläuft.

11. Gassack nach einem der vorhergehenden Ansprüche, **dadurch gekennzeichnet, daß** die Gasleitung (24; 24') unmittelbar mit einem Gasgenerator (26) in Strömungsverbindung steht.
